(19) Europäisches Patentamt
European Patent Office
Office européen des brevets

(11) **EP 4 110 858 B1**

(12) **EUROPEAN PATENT SPECIFICATION**

(45) Date of publication and mention
of the grant of the patent:
**03.07.2024 Bulletin 2024/27**

(21) Application number: **21709474.7**

(22) Date of filing: **24.02.2021**

(51) International Patent Classification (IPC):
*C08J 7/04* $^{(2020.01)}$     *C08J 7/043* $^{(2020.01)}$
*C08J 7/052* $^{(2020.01)}$

(52) Cooperative Patent Classification (CPC):
**C08J 7/042; C08J 7/0427; C08J 7/043;
C08J 7/052;** C08J 2367/02; C08J 2423/08;
C08J 2453/02; C08J 2493/00

(86) International application number:
**PCT/IB2021/051538**

(87) International publication number:
**WO 2021/171190 (02.09.2021 Gazette 2021/35)**

(54) **COMPOSITE POLYMERIC FILM**

POLYMERVERBUNDFOLIE

FILM POLYMÈRE COMPOSITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2020 GB 202002633**

(43) Date of publication of application:
**04.01.2023 Bulletin 2023/01**

(73) Proprietor: **Mylar Specialty Films U.S. Limited
Partnership
Chester, VA 23836 (US)**

(72) Inventors:
• **DENG, Fenghua**
  **Chester, Virginia 23836 (US)**
• **LIU, Shengsheng**
  **Chester, Virginia 23836 (US)**
• **NELSON, Erik**
  **Chester, Virginia 23836 (US)**

(74) Representative: **Carpmaels & Ransford LLP
One Southampton Row
London WC1B 5HA (GB)**

(56) References cited:
WO-A2-2006/001548     JP-A- H1 171 483
JP-A- 2017 110 112     US-A1- 2010 167 074

**Description**

This invention relates to a composite polymeric film, and a process for the production thereof. The film is particularly suitable for use as a sealable film, particularly a sealable and peelable film for packaging applications, particularly for the packaging of food, such as ready-prepared ovenable meals. In particular, the film of the present invention is suitable for use as a lid for a container which contains a foodstuff such as a ready-prepared ovenable meal.

Plastic containers are commonplace in packaging applications, such as food packaging, and in particular for packaging convenience foods, for example ready-prepared ovenable meals which are warmed either in a microwave oven or in a conventional oven. Also known are "dual-ovenable" containers which may be warmed in either a microwave or a conventional oven. The container may be formed of polyester, such as polyethylene terephthalate (PET), polypropylene (PP), polyethylene (PE) or polystyrene (PS), or may be PVDC-coated. A container in widespread use for ovenable meals is an APET/CPET container, which consists of a composite material having an amorphous PET layer on top of a crystalline PET layer. Other suitable types of container include a foil tray (particularly an aluminium foil tray), a metallised tray and a tray formed from PET-coated cartonboard or paperboard. Of particular utility are trays formed from metallised (particularly flash-metallised) PET cartonboard.

Such containers require lids which not only securely seal the container, in order to prevent leakage and drying out of the packaged contents, and to provide a protective barrier against insects, bacteria and air-borne contaminants during storage, but which are also able to be readily peeled from the container on opening. Other important requirements of the lids are that they should not stick to the packaged contents and that they should be able to withstand the heat generated in the oven. Container lids are typically made from film comprising a flexible polymeric substrate and a heat-sealable polymeric layer, and are often referred to as "lidding" films. The manufacture of sealed containers using lidding films involves the formation of a seal between the lidding film and the container. This seal is formed by placing the lid on top of the container and applying heat and pressure in order to soften or melt the sealable coating layer so that it adheres to the surface of the container and forms an effective seal between the lid and the container.

Biaxially oriented polyester film has been widely used as a flexible substrate for lidding films because of its excellent mechanical strength, and various functional coatings have been proposed for use as the heat-sealable polymeric layer. However, there are some container substrates to which conventional polyester lidding films exhibit a relatively low heat-seal strength, and there remains a need to broaden the range of application of polyester lidding films. In particular, there remains a need to improve the sealability of polyester films to containers made from polyolefins, particularly polypropylene or polyethylene containers, which tend to be more economical than the traditional CPET/APET trays. There remains a particular need to provide a film which exhibits excellent sealability and peelability to polyolefin containers and which exhibits a "clean peel". As used herein, the term "clean peel" means that no or substantially no residue of the heat-sealable layer is visible on the surface of the container after peeling the lidding film therefrom. A clean peel is important from the perspective of the consumer, in order to avoid the impression that the contents of the container might be contaminated by the sealant material. Moreover, there remains a need to provide a film which exhibits excellent sealability and peelability characteristics and which also exhibits good optical properties, since optical clarity is perceived as a marker of quality, freshness and hygiene in respect of the product and the packaged goods.

WO2006/001548A2 describes an adhesive compound composition comprising an olefin-based block copolymer elastomer, an ethylene-vinyl acetate copolymer having a vinyl acetate content of 25 to 80 wt% and a tackifier.

According to a first aspect of the present invention, there is provided a heat-sealable peelable composite film comprising an oriented polyester substrate layer having a first and second surface and disposed on a first surface of the substrate layer a heat-sealable polymeric coating layer comprising a styrenic linear block copolymer thermoplastic elastomer, an ethylene vinyl acetate (EVA) copolymer and a tackifying resin, wherein the heat-sealable polymeric layer comprises the EVA copolymer in an amount of from 25 to 35 wt% by total weight of the heat-sealable polymeric layer.

There is also provided a heat-sealable composite film comprising an oriented polyester substrate layer having a first and second surface and disposed on a first surface of the substrate layer a heat-sealable polymeric coating layer comprising a styrenic linear block copolymer thermoplastic elastomer, a tackifying resin and a blend of a first ethylene vinyl acetate (EVA) copolymer (EVA-1) and a second ethylene vinyl acetate (EVA) copolymer (EVA-2), wherein said first EVA copolymer (EVA-1) has a vinyl acetate (VA) content in the range of 20 to 50wt% and said second EVA copolymer (EVA-2) has a VA content in the range of 5 to 20wt%, wherein the weight ratio of EVA-2/EVA-1 is in the range of greater than 0/100 to 65/100, and wherein the heat-sealable polymeric layer comprises a total amount of the EVA copolymer from 20 to 40 wt% by total weight of the heat-sealable polymeric layer.

The first surface of the polyester substrate layer is the surface which faces the container when the film is used as a lidding film as described herein. The second surface of the polyester substrate layer is the surface which is outermost, and which faces away from the interior of the container.

The substrate is a self-supporting film or sheet by which is meant a film or sheet capable of independent existence in the absence of a supporting base. The substrate is uniaxially or biaxially oriented, preferably biaxially oriented. It will be appreciated from the disclosure hereinbelow that the substrate may be described as semi-crystalline.

As used herein, the term "semi-crystalline" refers to a film which exhibits a crystallinity of at least 5%, preferably at least 10%, preferably at least 15%, preferably at least 20%, preferably at least 25%, and typically no higher than 50% or 45% or 40%.

The substrate may be formed from any suitable film-forming thermoplastic polyester material. Synthetic linear polyesters are preferred. It will be appreciated that the substrate polyester is crystallisable. Suitable polyesters include those derived from one or more dicarboxylic acids, such as terephthalic acid, isophthalic acid, phthalic acid, 2,5-, 2,6- or 2,7-naphthalenedicarboxylic acid, 4,4'-diphenyldicarboxylic acid, hexahydro-terephthalic acid, 1,10-decanedicarboxylic acid, and in particular aliphatic dicarboxylic acids including those of the general formula $C_nH_{2n}(COOH)_2$ wherein n is 2 to 8, such as succinic acid, glutaric acid sebacic acid, adipic acid, azelaic acid, suberic acid or pimelic acid; and from one or more glycols, particularly an aliphatic or cycloaliphatic glycol, such as ethylene glycol, 1,3-propanediol, 1,4-butanediol, neopentyl glycol and 1,4-cyclohexanedimethanol (CHDM).

The dicarboxylic acid component of the substrate polyester preferably comprises at least one aromatic dicarboxylic acid (which is preferably selected from terephthalic acid and 2,6-naphthalenedicarboxylic acid, and preferably terephthalic acid), and optionally further comprises a second, different dicarboxylic acid preferably selected from the dicarboxylic acids noted above, and preferably from an aromatic dicarboxylic acid (particularly isophthalic acid) and the aliphatic diacids noted above. Thus, the polyester is preferably derived from an aromatic dicarboxylic acid, preferably terephthalic acid or 2,6-naphthalenedicarboxylic acid, preferably terephthalic acid. Preferably, the dicarboxylic acid component of the substrate polyester contains only one aromatic dicarboxylic acid, which is preferably terephthalic acid or 2,6-naphthalenedicarboxylic acid, and is preferably terephthalic acid.

The glycol component of the substrate polyester preferably comprises at least one aliphatic diol, at least one of which is ethylene glycol. Preferably, the glycol component of the substrate polyester is an aliphatic diol, preferably ethylene glycol.

A preferred substrate polyester is selected from polyethylene terephthalate (PET) and polyethylene naphthalate (PEN), or a PET-based or PEN-based copolyester. Polyethylene terephthalate (PET) or a copolyester thereof is particularly preferred. Preferably the substrate polyester is PET.

The film-forming polyester resin is the major component of the substrate, and makes up at least 70% by weight of the total weight of the substrate, preferably at least 80%, preferably at least 85%, preferably at least 90%, preferably at least 95%, more typically at least 98%, more typically at least 99% by weight of the total weight of the substrate.

The intrinsic viscosity of the polyester from which the substrate is manufactured is preferably at least about 0.60, preferably at least about 0.61, preferably at least 0.62, preferably at least 0.63, preferably at least 0.64, preferably at least 0.65, preferably at least about 0.70, preferably at least about 0.75. Preferably, the intrinsic viscosity of the substrate polyester is not more than 0.85, preferably not more than 0.83. The use of polyesters with too high a viscosity can lead to difficulties in film manufacture and/or require specialised, more robust film-forming equipment. For instance, increasing the viscosity too greatly may mean that it is appropriate to reduce output (i.e. reduce the amount of polyester extruded per unit time, which leads to a less economical process) or to increase the extrusion temperature in order to reduce the viscosity of the melt (which in turn can lead to thermal degradation of the polymer and the loss of associated properties) in order to achieve stable film production.

Formation of the polyesters is conveniently effected in a known manner by condensation or ester interchange, generally at temperatures up to about 295°C. In a preferred embodiment, solid state polymerisation may be used to increase the intrinsic viscosity of the polyesters to the desired value, using conventional techniques well-known in the art, for instance using a fluidised bed such as a nitrogen fluidised bed or a vacuum fluidised bed using a rotary vacuum drier.

The polyester substrate may further comprise any other additive conventionally employed in the manufacture of polyester films. Thus, agents such as particulate fillers, hydrolysis stabilisers, anti-oxidants, UV-stabilisers, cross-linking agents, dyes, lubricants, radical scavengers, thermal stabilisers, surface active agents, gloss improvers, prodegradents, viscosity modifiers and dispersion stabilisers may be incorporated as appropriate. Of particular utility are particulate fillers, hydrolysis stabilisers (preferably glycidyl esters of branched monocarboxylic acids) and anti-oxidants (preferably hindered phenols, secondary aromatic amines and hindered amines), and suitable additives in this regard are disclosed in WO-2012/120260-A. UV-stabilisers are also of particular utility.

Particulate fillers can improve handling and windability during manufacture and/or modulate optical properties, as is well known in the art. The particulate filler is typically a particulate inorganic filler (e.g. metal or metalloid oxides, such as alumina, titania, talc and silica (especially precipitated or diatomaceous silica and silica gels), calcined china clay and alkaline metal salts, such as the carbonates and sulphates of calcium and barium). A particulate inorganic filler is preferably finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.01 to 5 μm, more preferably 0.05 to 1.5 μm, and particularly 0.15 to 1.2 μm. Preferably at least 90%, more preferably at least 95% by volume of the inorganic filler particles are within the range of the volume distributed median particle diameter ± 0.8 μm, and particularly ± 0.5 μm. Particle size of the filler particles may be measured by electron microscope, coulter counter, sedimentation analysis and static or dynamic light scattering. Techniques based on laser light diffraction are preferred. The aforementioned conventionally employed additives may be introduced into the polymer in a conventional manner. For example, by mixing with the monomeric reactants from which the film-forming polymer is derived, or the components may be mixed with the polymer by tumble or dry blending or by compounding in an extruder, followed by cooling and, usually, comminution into granules or chips. Masterbatching technology may also be employed.

The heat-sealable polymeric layer disposed on a first surface of the substrate is capable of forming a heat-seal bond to the surfaces of a container, particularly a polyolefin container, particularly a polypropylene or polyethylene container, and particularly a polypropylene container. The heat-sealable layer is capable of softening to a sufficient extent on heating that its viscosity becomes low enough to allow adequate wetting for it to adhere to the surface to which it is being bonded.

The styrenic linear block copolymer thermoplastic elastomer of the heat-sealable polymeric layer preferably consists of polystyrene blocks and rubber blocks derived from butadiene (conventionally 1,3-butadiene) and/or isoprene, or their hydrogenated equivalents.

The styrene content is preferably in the range from 5 to 50%, preferably from 8 to 30%, preferably 10 to about 20%, and preferably 10 to about 15%, by mass of the copolymer. The rubber blocks make up the balance of the mass of the copolymer. If the styrene content is too great then the polymer becomes too stiff, and if the styrene content is too low then the polymer becomes too rubbery.

Thus, the rubber blocks may consist of polybutadiene or polyisoprene or combinations thereof. Such copolymers may be described as triblock copolymers with polystyrene blocks at each end of the triblock linked together by a rubber block (polybutadiene and/or polyisoprene), and these copolymers are commonly referred to as SBS or SIS copolymers.

Of particular utility in the present invention are the hydrogenated equivalents of the SBS and SIS copolymers. The hydrogenated butadiene- or isoprene-derived blocks may be prepared by selective hydrogenation according to conventional techniques well-known in the art. Hydrogenation may be carried out using any of the processes known in the prior art, for example, as taught in US-3,494,942, US-3,634,594, US-3,670,054 or US-3,700,633. Hydrogenation can be carried out under such conditions that at least about 90% (preferably at least 95%, preferably at least 98%) of the conjugated diene double bonds have been reduced, and from 0 to 10% of the arene double bonds have been reduced. The hydrogenated styrenic copolymers are preferably selected from (i) triblock copolymers containing styrene blocks and rubber blocks consisting of ethylene and butylene repeating units (referred to herein as SEBS copolymers); and (ii) triblock copolymers containing styrene blocks and rubber blocks consisting of ethylene and propylene repeating units (referred to herein as SEPS copolymers). The ethylene/butylene (EB) block is derived from 1,4- and 1,2-polybutadienes, and the ethylene/propylene (EP) block from 1,4-polyisoprene. Such copolymers are commercially available under the tradename Kraton™ G. Most preferred are the SEBS copolymers. A particularly preferred grade is Kraton™ G1657M.

The weight average molecular weight (Mw) of the styrenic copolymer is preferably from 50,000 to 400,000, preferably from 50,000 to 200,000. The weight average molecular weight (Mw) of the styrene block is preferably from 5,000 to 50,000, preferably from 5,000 to 25,000. Molecular weight is suitably measured by conventional GPC techniques, preferably using a polystyrene (PS) standard. For instance, molecular weight determination may be conducted on a Hewlett-Packard 1050 Series HPLC system equipped with two GPC Ultrastyragel columns, 103 and 104 Å (5 μm mixed, 300 mm x 19 mm, Waters Millipore Corporation, Milford, MA, USA) and THF as mobile phase.

Preferably, the tensile strength of the styrenic copolymer, measured according to ASTM D412-16 on film cast from toluene solution, is at least 5 MPa, preferably at least 10 MPa, preferably at least 15 MPa, preferably at least 20 MPa. Typically, the tensile strength is in the range of 15 to 30 MPa. If the tensile strength is too low, the cohesive strength of the heat-sealable layer becomes too low, which increases the risk of cohesive failure in the layer and may not allow a clean peel.

Preferably, the solution viscosity of the styrenic copolymer is no more than about 250 cPs, preferably no more than about 100 cPs, measured with a Brookfield Viscometer at 25°C in a toluene solution at 10wt%. If the solution viscosity is too high, the coating formulation may become too viscous to easily coat on the substrate, and may the styrenic copolymer may not properly dissolve in the solvent vehicle of the coating formulation. Typically, the solution viscosity of the styrenic copolymer is at least 5 cPs, preferably at least 10 cPs. Preferably the solution viscosity is in the range of 5 to 250 cPs, preferably 10 to 100 cPs.

The glass transition temperature of suitable styrenic copolymers is preferably in the range of -50 to -80°C, preferably -60 to -70°C. The melting point of suitable styrenic copolymers is preferably greater than 0°C, and preferably less than 50°C.

The heat-sealable polymeric layer preferably comprises the styrenic copolymer in an amount of from 10 to 50 wt% of the layer, preferably in an amount of from 20 to 40 wt%, preferably from 25 to 35 wt%, by total weight of the heat-sealable polymeric layer.

The heat-sealable layer also comprises ethylene vinyl acetate (EVA) copolymer resin, which improves the bond between the styrenic copolymer and the polyester substrate. Suitable EVA copolymers may be obtained from DuPont as Elvax™ resins. The vinyl acetate (VA) content of these copolymer resins is preferably in the range of 5 to 50 wt%, preferably 15 to 50wt%, and preferably 18 to 40wt% (which may be determined by ASTM E168-16). Where a single grade of EVA copolymer is present in the heat-sealable layer, the vinyl acetate (VA) content of these copolymer resins is preferably in the range of 15 to 50wt%, and preferably 18 to 40wt%, preferably 20 to 35wt%, preferably 20 to 30 wt%, preferably 22 to 28wt%, in order to provide excellent clarity, along with excellent peel strength and a clean peel. The EVA copolymer may optionally comprise minor amounts of one or more (preferably only one) additional comonomer(s) (i.e. other than the ethylene and vinyl acetate comonomers), preferably ethylenically unsaturated comonomers (particularly acrylic acid and methacrylic acid), preferably wherein the total amount of additional comonomer(s) is no more than about 10 wt%, preferably no more than about 5wt%, preferably no more than about 2.5wt%, preferably no more than about 1wt%.

The melting point of the EVA copolymer resin is preferably in the range of from 40°C to 95°C, preferably 45°C to 85°C, preferably 45°C to 75°C.

The melt index of the EVA copolymer resin is preferably in the range of from 5 to 1000, preferably 5 to 600, preferably 5 to 200, preferably 5 to 100 g/10min. Where a single grade of EVA copolymer is present in the heat-sealable layer, the melt index of the EVA copolymer is preferably in the range of from 5 to 200, preferably 5 to 100 g/10min.

The heat-sealable polymeric layer of the film defined in claim 17 comprises the EVA copolymer in a total amount of from 20 to 40 wt%, preferably from 25 to 35 wt%, by total weight of the heat-sealable polymeric layer. The heat-sealable polymeric layer of the film defined in claim 1 comprises the EVA copolymer in an amount of from 25 to 35 wt%, by total weight of the heat-sealable polymeric layer.

In a particularly preferred embodiment, the heat-sealable polymeric layer comprises a blend of a first EVA copolymer (EVA-1) and a second EVA copolymer (EVA-2), wherein the total amount of EVA copolymer is the same as described above. The first EVA copolymer (EVA-1) preferably has a VA content in the range of 20 to 50wt%, preferably 20 to 40wt%, and preferably a melt index in the range of from 2.5 to 100, preferably 5 to 100 g/10min. The second EVA copolymer (EVA-2) preferably has a VA content in the range of from 5 to 20wt%, preferably 10 to 20wt%, and preferably exhibits a melt index of from 100 to 1000, preferably 150 to 600 g/10min. The weight ratio of EVA-2/EVA-1 is preferably in the range of greater than 0/100 to 100/100, more preferably greater than 0/100 to 65/100, more preferably 15/100 to 50/100, more preferably 15/100 to 30/100.

The heat-sealable layer also comprises a tackifying resin, which improves the adhesive bond between the styrenic copolymer and the polyester substrate. The tackifying resin also improves the compatibility between the styrenic copolymer and the EVA component, thereby discouraging phase separation therebetween, which improves the cohesive strength of the heat-sealable layer and its optical properties, particularly clarity.

In general, suitable tackifying resins for the styrenic copolymers disclosed herein include polystyrene block compatible resins and hydrogenated (mid) block compatible resins, and mixtures thereof. Resins compatible with the polystyrene block may be selected from the group of coumarone-indene resin, polyindene resin, poly(methyl indene) resin, polystyrene resin, vinyltoluene-alphamethylstyrene resin, alphamethylstyrene resin and polyphenylene ether, in particular poly(2,6-dimethyl-1,4-phenylene ether). Such resins are e.g. sold under the trademarks "HERCURES", "ENDEX", "KRISTALEX", "NEVCHEM" and "PICCOTEX". Resins compatible with the hydrogenated (mid) block may be selected from the group consisting of compatible Cs hydrocarbon resins, hydrogenated Cs hydrocarbon resins, styrenated Cs resins, $C_5/C_9$ resins, styrenated terpene resins, fully hydrogenated or partially hydrogenated $C_9$ hydrocarbon resins, polyterpenes, rosin and rosin esters, rosin derivatives and mixtures thereof. Such resins are e.g. sold under the trademarks "REGALITE", "REGALREZ", "ESCOREZ" and "ARKON".

Particularly suitable tackifying resins are selected from synthetic and natural polyterpenes, hydrocarbon resins, rosin and rosin ester resins, and combinations thereof. The tackifying resins suitably exhibit ring and ball softening points from 20°C to 160°C, preferably 90°C to 125°C (preferably tested according to the procedure taught in ASTM E28-18). The number average molecular weights of the tackifying resins are preferably at least 200 or 500, and preferably at most 5000, 2000, or 1000 (preferably measured by the GPC techniques described hereinabove).

Natural polyterpene tackifying resins are based on natural and renewable feedstocks, including alpha-pinene, beta-pinene and d-limonene. Examples include:

1) Piccolyte® C resin (C85, C105, C115, C125, C135), Piccolyte® F resin (F105, F115), Piccolyte® A resin (A25, A115, A125, A135), Piccolyte® S resin (S25, S85, S115, S 125, S 135); all available from Pinova.

2) Sylvares® TR resin (A25L, 90, 105, 7115, 7125); all available from Arizona Chemical.

Hydrocarbon tackifying resins are made from petroleum-based feedstocks, either aliphatic ($C_5$), aromatic ($C_9$), DCPD (dicyclopentadiene), or mixtures of these. Examples include:

1) Piccotac™ 1020, 1095, 1100, 1115, 6095-E, 8095; Picco™ 5120, 5140, 6100, 2215; Regalite™ S1100, 7125;

Regalite™ R1010, 1100, 9100, Regalrez™ 1018, 1094, 3102, 6108; all available from Eastman;

2) Quintone® A100, B170, K100, M100, N295, U190, S100, D100, U185; all available from Nippon Zeon of Japan;

3) Escorez™ 1102, 1304, 1315, 2203, 5300, 5320, 5340, 5400, 5415, 5600, 5615, 5690; all available from ExxonMobil;

4) Wingtack® 86, 95, 98; Norsolene® W85, 90, 100, 110, 120, 130, 140; all available from Cray Valley.

Rosin ester tackifying resins are produced by the reaction between rosin acids and alcohols. The rosin acids may be modified by hydrogenation or disproportion. The typical commercial products are methyl, triethylene glycol, glycerol, and pentaerythritol esters. Examples include:

1) Foral® 85, 105; 3085; Pentalyn® A, H, Pentalyn® 9085, 9100; Staybelite® Ester 3, 5, 10; all available from Pinova;

2) Sylvalite™ RE80HP, RE85GB, RE100XL, RE100L, 105L, 110L, RE25, 85, 98; all available from Arizona Chemical;

3) Foralyn™ 90, 110, 5020F; Permalyn™ 2085, 5095, 3100, 5110, 6110; all available from Eastman.

The heat-sealable polymeric layer preferably comprises the tackifying resin in an amount of from 15 to 50 wt% of the layer, preferably from about 15 to 40 wt%, typically from about 30 to 40 wt%, by total weight of the heat-sealable polymeric layer.

Thus, the heat-sealable polymeric layer preferably comprises the afore-mentioned components in the following amounts:

(i) the styrenic copolymer in an amount of from 10 to 50 wt%, preferably from 20 to 40 wt%, preferably from 25 to 35 wt%, of the layer;
(ii) the EVA resin in an amount of from 20 to 70 wt%, preferably from 20 to 40 wt%, preferably from 25 to 35 wt% of the layer; and
(iii) the tackifying resin in an amount of from 15 to 50 wt%, preferably from about 15 to 40 wt%, typically from about 30 to 40 wt%, of the layer.

It will be appreciated that the above amounts relate to the amount by weight of each component in the finished heat-sealable coating layer (i.e. the dry weight of the heat-sealable coating layer).

The heat-sealable layer preferably also comprises a slip-aid or anti-blocking agent which improves the handling of the film, as is conventional in the art of sealant coatings. Suitable slip-aids include Carnauba wax, kemamide and silica. Such components are present in relatively minor amounts, typically no more than 5.0 wt%, typically no more than 2.0 wt%. Thus, in a preferred embodiment, the total amount of said styrenic linear block copolymer thermoplastic elastomer, ethylene vinyl acetate (EVA) copolymer and tackifying resin make up at least 90 wt%, preferably at least 92 wt%, preferably at least 95 wt% of the heat-sealable polymeric coating layer.

The heat-sealable layer is suitably disposed on the substrate by coating a coating formulation onto the polyester substrate, as discussed hereinbelow. The components of the heat-sealable layer are typically dispersed or dissolved in a coating vehicle, typically an organic solvent, preferably toluene. The coating formulation preferably comprises the coating vehicle in an amount of from 70 to 90, preferably 75 to 85 wt% of the coating formulation.

Formation of the composite film may be effected by conventional techniques well-known in the art. Conveniently, formation of the substrate is effected by extrusion, in accordance with the procedure described below.

In general terms the process comprises the steps of extruding a layer of molten polymer at a temperature within the range of from about 275 to about 300°C, preferably from about 290 to 295°C, quenching the extrudate and orienting the quenched extrudate in at least one direction. The substrate may be uniaxially oriented, but is preferably biaxially oriented by drawing in two mutually perpendicular directions in the plane of the film to achieve a satisfactory combination of mechanical and physical properties. Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties. In a tubular process, simultaneous biaxial orientation may be effected by extruding a thermoplastics polyester tube which is subsequently quenched, reheated and then expanded by internal gas pressure to induce transverse orientation, and withdrawn at a rate which will induce longitudinal orientation. Suitable simultaneous biaxial orientation processes are disclosed in EP-2108673-A and US-2009/0117362-A1.

In the preferred flat film process, the film-forming polyester is extruded through a slot die and rapidly quenched upon a chilled casting drum to ensure that the polyester is quenched to the amorphous state. Orientation is then effected by stretching the quenched extrudate in at least one direction at a temperature above the glass transition temperature of the polyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus.

Stretching is generally effected so that the dimension of the oriented film is from 2 to 5, more preferably 2.5 to 4.5 times its original dimension in the or each direction of stretching. More preferably, stretching is effect so that the dimension of the oriented film is from 3.0 to 3.3 times its original dimension in the forward draw, and from 3.3 to 3.9 times its original dimension in the sideways draw. Greater draw ratios (for example, up to about 8 times) may be used if orientation in only one direction is required. Stretching is conventionally effected at temperatures higher than the $T_g$ of the copolyester composition, preferably at least about 5°C higher, preferably at least about 15°C higher than the $T_g$, and preferably in the range of from about $T_g$+5°C to about $T_g$+75°C, preferably from about $T_g$+5°C to about $T_g$+30°C. Thus, typically stretching is effected at temperatures in the range of about 5 to about 155°C, preferably about 5 to about 110°C. It is not necessary to stretch equally in the machine and transverse directions although this is preferred if balanced properties are desired.

A stretched film may be, and preferably is, dimensionally stabilised by heat-setting under dimensional support at a temperature above the glass transition temperature of the polyester but below the melting temperature thereof, to induce the desired crystallisation of the polyester. During the heat-setting, a small amount of dimensional relaxation may be performed in the transverse direction (TD) by a procedure known as "toe-in". Toe-in can involve dimensional relaxation of the order 2 to 4%. While dimensional relaxation in the process or machine direction (MD) is also possible, as is known in the art. The actual heat-set temperature and time will vary depending on the composition of the film and its desired final thermal shrinkage but should not be selected so as to substantially degrade the toughness properties of the film such as tear resistance. Within these constraints, preferred films are heat-set at a temperature from about 80°C less than the melting temperature of the film (i.e. $T_M$-80°C) to about 10°C less than $T_M$ (i.e. $T_M$-10°C), preferably from about $T_M$-70°C to about $T_M$-20°C. Thus, the heat-set temperature is suitably in the range of from about 130 to about 245°C, preferably from about 150 to about 245°C, and preferably at least 180°C, preferably in the range of 190 to 230°C. After heat-setting the film is typically quenched rapidly in order induce the desired crystallinity of the polyester.

Preferably, the film is further stabilized through use of an in-line relaxation stage. Alternatively the relaxation treatment can be performed off-line. In this additional step, the film is heated at a temperature lower than that of the heat-setting stage, and with a much reduced MD and TD tension. The tension experienced by the film is a low tension and typically less than 5 kg/m, preferably less than 3.5 kg/m, preferably less than 2.5 kg/m, and typically in the range of 1.0 to 2.0 kg/m of film width. For a relaxation process which controls the film speed, the reduction in film speed (and therefore the strain relaxation) is typically in the range 0 to 2.5%, preferably 0.5 to 2.0%. There is no increase in the transverse dimension of the film during the heat-stabilisation step. The temperature to be used for the heat stabilisation step can vary depending on the desired combination of properties from the final film, with a higher temperature giving better, i.e. lower, residual shrinkage properties. A temperature of 135 to 250 °C is generally desirable, preferably 150 to 230 °C, more preferably 170 to 200 °C. The duration of heating will depend on the temperature used but is typically in the range of 10 to 40 seconds, with a duration of 20 to 30 seconds being preferred. This heat stabilisation process can be carried out by a variety of methods, including flat and vertical configurations and either "off-line" as a separate process step or "in-line" as a continuation of the film manufacturing process. Film thus processed will exhibit a smaller thermal shrinkage than that produced in the absence of such post heat-setting relaxation.

The intrinsic viscosity of the polyester film is preferably at least about 0.70, preferably at least about 0.75, preferably at least 0.80, and preferably no more than about 0.85, preferably no more than about 0.83.

Preferably, the composite film exhibits a clarity of at least 70%, preferably at least 75%, preferably at least 80%, and preferably at least 85%. In this embodiment, any filler in the layer is typically present in only small amounts, generally not exceeding 2.5 %, preferably not exceeding 2.0%, preferably not exceeding 1.1%, preferably not exceeding 0.6% and preferably not exceeding 0.3% by weight of a layer, preferably wherein the filler is silica, thereby allowing the windability of the film (i.e. the absence of blocking or sticking when the film is wound up into a roll) to be improved without an unacceptable reduction in optical properties. An optically clear film is particularly advantageous for a lidding film, since such films give the impression of freshness and hygiene to the consumer.

Formation of the heat-sealable layer is effected by coating the coating formulation onto the substrate. Coating may be effected using any suitable coating technique, typically roll coating and including gravure roll coating and reverse roll coating. Coating is preferably conducted "off-line", i.e. after any stretching and subsequent heat-setting employed during manufacture of the substrate. Alternatively, an "in-line" technique may be used, i.e. wherein the coating step takes place before, during or between any stretching operation(s) employed, typically between the forward and sideways stretches of a biaxial stretching operation ("inter-draw" coating). The coating formulation is preferably applied to the substrate to provide a dry coat weight of from about 3.5g/m$^2$ to about 10g/m$^2$.

Prior to application of the heat-sealable layer onto the substrate, the exposed surface of the substrate is preferably coated with a surface-modifying primer treatment to improve the bond between the substrate and the subsequently applied heat-sealable polymeric coating layer. Preferably, the primer is a polymer layer selected from polyvinylidene chloride (PVDC), EVA and ethylene acrylic acid (EAA) resins, preferably from PVDC and EVA resins, and preferably PVDC resins.

Thus, it is preferred that a primer layer is disposed on the first surface of the substrate layer of the composite film disclosed herein such that the layer order is substrate layer / primer layer / heat-sealable polymeric coating layer. It will be appreciated that the primer layer in direct contact with the substrate layer, and the heat-sealable polymeric coating layer is in direct contact with the primer layer.

The primer layer is suitably a coating layer. A primer coating layer may be coated using the coating techniques described herein, and may be coated in-line or off-line coated. The primer layer is preferably applied to the surface of the substrate layer to provide a dry coat-weight of from about 0.05 to about 1.0 $g/m^2$, preferably from about 0.1 $g/m^2$ to about 0.5 $g/m^2$. The final thickness of the primer layer is preferably no more than 1 $\mu$m, preferably no more than about 0.5$\mu$m, preferably no more than about 0.3$\mu$m, preferably at least 0.05 $\mu$m, and typically about 0.1$\mu$m

The thickness of the substrate is preferably from about 10 to about 100 $\mu$m, preferably from 10 to about 75 $\mu$m, and particularly from about 12 to about 50 $\mu$m.

The thickness of the heat-sealable layer is preferably no more than 45%, more preferably no more than 40 % and more preferably no more than 35 %, and preferably at least 5 % more preferably at least 10 %, and preferably from about 12 % to about 35 %, of the total thickness of the composite film. Typically, the heat-sealable layer has a thickness of up to about 25 $\mu$m, more preferably up to about 15 $\mu$m, more preferably up to about 10 $\mu$m, more preferably from about 2 to about 10 $\mu$m, and more preferably from about 3 to 6 $\mu$m.

The composite film preferably exhibits a heat-seal strength (or peel strength) as defined herein to a polypropylene substrate (preferably a polypropylene tray) in the range of 600 to 1500 g/25.4mm, preferably at least 700, preferably at least 800, preferably at least 900, preferably at least 1000 g/25.4mm, and preferably no more than 1500, preferably no more than 1200, preferably no more than 1125 g/25.4mm. Preferably, the heat-seal strength of the film to a standard PP tray is in the range of 800 to 1500 g/25.4mm, preferably 800 to 1200 g/25.4mm, preferably 800 to 1125 g/25.4mm. If the heat-seal strength is too high, the composite film can fracture or shred during the peel. If the heat-seal strength is too low, there is inadequate adhesion between the composite film and the substrate.

The composite film of the present invention is useful for sealing or providing a lid on a receptacle for packaging convenience or ready-prepared foods, for example ovenable meals which are warmed either in a microwave or a conventional oven. The receptacle may be a container such as a thermoformed tray or bowl, and may be formed of the tray materials described hereinabove. However, the composite film is particularly useful for sealing or providing a lid on such a receptacle which is made from polyolefin, particularly PP or PE, and particularly PP.

In a second aspect, the present invention provides a sealed container comprising a receptacle containing a food product, particularly an ovenable meal, and a lid formed from a heat-sealable composite film as defined herein. It will be appreciated that said heat-sealable polymeric layer of the composite film is in direct contact with the receptacle and that the composite film is adhered to the receptacle via a peelable heat-seal bond. The receptacle is preferably made from polyolefin, particularly PP or PE, and particularly PP. The sealed container is produced by techniques well-known to those skilled in the art. Once the food to be packaged has been introduced into the receptacle, the heat-sealable film lid is affixed using temperature and/or pressure using conventional techniques and equipment.

In a **third aspect,** the present invention provides the use of a composite film as described herein as a lid in the packaging of a food product, particularly an ovenable meal, said packaging further comprising a receptacle, particularly wherein the receptacle is made from polyolefin, particularly PP or PE, and particularly PP. It will be appreciated that the use of the third aspect is suitable for forming the sealed container of the second aspect.

The description and preferences of the first aspect are equally applicable to the second and third aspects.

### *Property Measurement*

The following test methods may be used to characterise the polymeric film:

(i) The optical properties of the film are evaluated by measuring the diffuse transmittance of visible light through the thickness of the film in terms of haze (wide angle scattering (>2.5 to 180°)) and **clarity** (narrow angle scattering (<2.5°)). The diffuse transmittance is the percentage of scattered transmitted visible light at said collection angles, as measured according to the standard test method ASTM D1003-13, preferably using a BYK Haze-gard Plus instrument. Thus, haze is calculated as 100 x $T_{DIF}/T_T$, where $T_T$ is the total amount of transmitted light and $T_{DIF}$ is the amount of diffused transmitted light scattered at an angle of greater than 2.5 from the normal. Clarity is calculated as the percentage of light that is subject to narrow angle scattering, i.e. less than 2.5° from the normal. Clarity was measured after ageing for a week at ambient temperature (20°C).

(ii) Intrinsic viscosity (in units of dL/g) of the polyester and polyester substrate is measured by solution viscometry in accordance with ASTM D5225-98(2003) on a Viscotek™ Y-501C Relative Viscometer (see, for instance, Hitchcock, Hammons & Yau in American Laboratory (August 1994) "The dual-capillary method for modern-day viscometry") by using a 0.5% by weight solution of polyester in o-chlorophenol at 25°C and using the Billmeyer single-point method to calculate intrinsic viscosity:

$$\eta = 0.25\eta red + 0.75(\ln \eta rel)/c$$

wherein:

$\eta$ = the intrinsic viscosity (in dL/g),
$\eta rel$ = the relative viscosity,
c = the concentration (in g/dL), &
$\eta red$ = reduced viscosity (in dL/g), which is equivalent to ($\eta rel$-1)/c (also expressed as $\eta sp$/c where $\eta sp$ is the specific viscosity).

(iii) Glass transition temperature ($T_g$) and crystalline melting point ($T_m$) were measured by differential scanning calorimetry (DSC) using a PerkinElmer HyperDSC 8500. Unless otherwise stated, measurements were made according to the following standard test method and based on the method described in ASTM E1356-98. The sample was maintained under an atmosphere of dry nitrogen for the duration of the scan. A flow rate of 20 ml min$^{-1}$ and Al pans were used. Samples (5 mg) were heated at 20 °C/min from 20°C to 350°C

The value of a $T_g$ was determined as the extrapolated onset temperature of the glass transition observed on the DSC scans (heat flow (W/g) against temperature (°C)), as described in ASTM E1356-98. The value of a $T_m$ was determined from the DSC scans as the peak endotherm of the transition.

(iv) Crystallinity was measured from the DSC analysis described hereinabove as the degree of crystallinity ($X_c$) calculated according to the equation:

$$X_c = \Delta H_m/\Delta H_m^{\circ}$$

wherein:

$\Delta H_m$ = experimental enthalpy of fusion calculated from the integral of the melting endotherm;
$\Delta H_m^{\circ}$ = theoretical enthalpy of fusion of the corresponding poly(alkylene-carboxylate) homopolymer at 100 % crystallinity. Thus, for PET (or PET-based) polyesters, $\Delta H_m^{\circ}$ is the theoretical enthalpy of fusion of a 100% crystalline PET polymer (140 J/g), and for PEN (or PEN-based) polyesters, $\Delta H_m^{\circ}$ is the theoretical enthalpy of fusion of a 100% crystalline PEN polymer (103 J/g), as defined in the literature (B. Wunderlich, Macromolecular Physics, Academic Press, New York, (1976)).

(v) Heat seal strength (also referred to herein as peel strength) of coatings to mineral filled white polypropylene (30 wt% mineral, 0.36 mm thickness) was assessed as follows. The coated film was sealed to PP using a Sentinel heat sealer (Model 12 by Packaging Industries Group Inc.). Unless otherwise stated, the heat seal conditions were: 177°C (350°F) (top jaw), 38°C (100°F) (bottom jaw)/0.1 second/552 kPa (80psi). In cases where the top jaw was at some other temperature, the bottom jaw was still at approximately 38°C (100°F). The sealed sample was marked and cut into 25mm width strips, and the heat seal strength was determined by peel strength testing on an INSTRON® model 4464 test machine. The jaws were set 50 mm apart. The upper jaw held film piece of the sealed sample and travelled up at a speed of 250 mm/min, while the lower jaw held PP piece of the sealed sample and was stationary. The average force needed to separate the two pieces of film was recorded. Three sealed sample pieces were measured for each coated sample.

(vi) Melt Index is determined according to ASTM D1238-13 (at a temperature of 190°C and a test load of 2.16kg).

(vii) The melting point of the EVA resin is determined by differential scanning calorimetry at a heating rate of 10°C/min according to ASTM D3418-15.

The invention is further illustrated by the following examples. It will be appreciated that the examples are for illustrative purposes only and are not intended to limit the invention as described above. Modification of detail may be made without departing from the scope of the invention.

## EXAMPLES

The materials noted in Table 1 were used to prepare composite films:

**Table 1**

| Raw Material | Supplier | Description |
|---|---|---|
| Elvax® 3180 | DuPont | EVA (28 wt% VA) |
| Elvax® 410 | DuPont | EVA (18 wt% VA) |
| Elvax® 4260 | DuPont | EVA (28 wt% VA, 1 wt% methacrylic acid) |
| Elvax 3200-2 | DuPont | EVA (22.5 wt% VA) |
| Elvax 3185 | DuPont | EVA (32 wt% VA) |
| Elvax 4031 WLG | DuPont | EVA (40 wt% VA) |
| Queo™ 7007LA | Borealis AG | ethylene-octene-1 copolymer |
| Kraton® G1657ms | Kraton | SEBS; Styrene/rubber ratio: 13/87 |
| Kraton® D1161 | Kraton | SIS; Styrene/rubber ratio: 15/85 |
| Kraton® D1102 | Kraton | SBS; Styrene/rubber ratio: 28/72 |
| Piccolyte® M115 | Pinova Solutions | Polyterpene resin, softening point 111-119 °C |
| Foral® 85 | Pinova Solutions | Rosin ester, softening point 80-88 °C |
| Pentalyn® H | Pinova Solutions | Rosin ester, softening point 94-102°C |
| Carnauba wax | Strahl & Pitsch | slip aid |
| Kemamide EZ | PMC Biogenix | slip aid |
| Syloid® 620 | W. R. Grace | amorphous silica |

### Comparative Examples 1 to 4; Examples 5 to 10

A polyethylene terephthalate (PET) composition was melt-extruded, cast onto a water-cooled rotating quench drum to yield an amorphous cast extrudate. The cast extrudate was heated to a temperature in the range of about 50 to 80°C and then stretched longitudinally at a forward draw ratio of about 3:1. The film was passed into a stenter oven at a temperature of 100°C where the film was stretched in the sideways direction to approximately 3 times its original dimensions. The biaxially stretched film was heat-set at a temperature of from 210°C to 230°C in a 3-stage crystallizer by conventional means. The PET film thickness was 23$\mu$m.

A PVDC primer coating was coated off-line at a coat weight of 0.5 g/m$^2$ to one surface of the PET film.

A range of composite films were prepared by coating a heat-sealable coating formulation having the composition shown in Table 2 onto the primed surface of the PET substrate prepared as described above. The amounts of the components of the coating formulation are the amounts by weight of each component in the finished heat-sealable coating layer (i.e. the dry weight of the heat-sealable coating layer). The coating formulations in Table 2 were prepared at 20 wt% in toluene, except for Examples 1, 2 and 3 which were prepared at 15 wt% in toluene. The coating was conducted off-line by gravure coating at a coat-weight of 6.0g/m2.

The composite films were heat-sealed (177°C (350°F); dwell time 0.1 second; pressure 552 kPa (80 psi)) to a polypropylene substrate and the peel strengths of the composite films were tested as described herein. The results are provided in Table 2.

The films according to the present invention exhibited an easy and clean peel when manually peeled from the tray. In contrast, the films of Comparative Examples 1, 2 and 3 left a coating residue on the polypropylene substrate after peeling.

**Table 2**

| | 1 (C) | 2 (C) | 3 (C) | 4 (C) | 5 | 6 | 7 | 8 | 9 | 10 |
|---|---|---|---|---|---|---|---|---|---|---|
| ***EVA copolymer*:** | | | | | | | | | | |
| Elvax® 3180 | | | | | 15.5% | | | | | |
| Elvax® 410 | | | | | 15.5% | | | | | |
| Elvax® 4260 | | | 48.5% | 60% | | 31% | 28.5% | 31% | 31% | 31% |
| ***Styrenic Block Copolymer*:** | | | | | | | | | | |
| Kraton® G1657ms | 97% | 60% | 48.5% | | 29% | 29% | 28% | | | |
| Kraton® D1161 | | | | | | | | 29% | 29% | |
| Kraton® D1102 | | | | | | | | | | 29% |
| ***Tackifier*:** | | | | | | | | | | |
| Piccolyte® M115 | | 37% | | 37% | 37% | 37% | 37% | | 37% | 37% |
| Foral® 85 | | | | | | | | 18% | | |
| Pentalyn® H | | | | | | | | 19% | | |
| ***Other Ingredients*:** | | | | | | | | | | |
| Carnauba wax | | | | | | | 5.0% | | | |
| Kemamide EZ | 1.5% | 1.5% | 1.5% | 1.5% | 1.5% | 1.5% | | 1.5% | 1.5% | 1.5% |
| Syloid® 620 | 1.5% | 1.5% | 1.5% | 1.5% | 1.5% | 1.5% | 1.5% | 1.5% | 1.5% | 1.5% |
| | | | | | | | | | | |
| Peel strength (g/ 25.4mm) | 433* | 721* | 843* | 594 | 874 | 1013 | 938 | 872 | 694 | 672 |
| * coating residue observed on the PP substrate after peeling | | | | | | | | | | |

The peel strength of the composite films of Comparative Example 4 (no styrenic block copolymer) and Example 6 (styrenic block copolymer) were tested over a range of temperatures, and the results are shown in Table 3. The heat-sealing process and the test method was the same as previously described. The inventive example was found to exhibit superior peel strength at each temperature tested.

**Table 3**

| Sealing temperature | 163°C (325°F) | 177°C (350°F) | 191°C (375°F) | 204°C (400°F) |
|---|---|---|---|---|
| Peel strength for Example 4 (C) (g/25.4mm) | 479 | 594 | 506 | 623 |
| Peel strength for Example 6 (g/25.4mm) | 502 | 1013 | 1476 | 1273 |

### Comparative Example 11 and Examples 12 to 16

A further series of composite films were prepared to investigate the effect of the vinyl acetate content of the EVA copolymer on peel strength and clarity. The films were prepared using the procedure described for Examples 5 to 10. The coating composition was constituted as follows:

| | | |
|---|---|---|
| EVA resin: | | 35.0 wt% |
| Styrenic Block Copolymer: | Kraton® G1657ms | 28.0 wt% |
| Tackifier: | Piccolyte® M115 | 35.5 wt% |
| Other: | Syloid® 620 | 1.5 wt% |

The EVA resin was varied as shown in Table 4 below. The coating formulations were prepared at 20 wt% in toluene and off-line coated by gravure coating at a coat-weight of $6.0g/m^2$ onto the PVDC-primed surface of the PET substrate described above. The clarity and peel strength of each composite film, measured as described herein, are in Table 4.

**Table 4**

| Example | 11 (C) | 12 | 13 | 14 | 15 | 16 |
|---|---|---|---|---|---|---|
| EVA resin | Queo® 7007LA | Elvax® 3200-2 | Elvax® 3180 | Elvax® 4260 | Elvax® 3185 | Elvax® 4031 |
| wt% VA | 0 | 22.5 | 28 | 28 | 32 | 40 |
| Clarity (%) | 93.8 | 85.3 | 80.5 | 79.4 | 76.1 | 70.1 |
| Peel strength (g/ 25.4mm) | 799a | 1107 | 1048 | 1029 | 1014 | 951 |
| a: non-clean peel; coating residue observed on the PP substrate after peeling | | | | | | |

The results in Table 4 demonstrate that clarity generally decreases with increasing VA content of the EVA resin. The results also demonstrate that adhesion performance becomes unsatisfactory as the VA content is reduced to zero.

### Examples 17 to 22

A further series of composite films were prepared to investigate the effect on peel strength and clarity of blends of EVA resins having differing vinyl acetate contents. Examples 17 to 22 were based on Example 14, and replaced part of the Elvax®4260 (28wt% VA) with Elvax®410 (18wt% VA). The composition of the coating layer and base layer, and the method of preparation of the composite film, were otherwise identical to Example 14. The EVA resin was varied as shown in Table 5 below, which also shows the clarity and peel strength performance.

**Table 5**

| Example | 14 | 17 | 18 | 19 | 20 | 21 | 22 |
|---|---|---|---|---|---|---|---|
| Wt Ratio of Elvax 410/Elvax 4260 | 0/100 | 8/100 | 17/100 | 28/100 | 43/100 | 67/100 | 100/100 |
| Clarity (%) | 79.4 | 82.9 | 89.4 | 88.0 | 86.1 | 73.2 | 76.9 |
| Peel Strength (g/25.4mm) | 1029 | 1023 | 1075 | 1120 | 982 | 1053 | 1057 |

The results in Table 5 demonstrate that an EVA resin with a relatively low VA content can serve as a compatibilizer to prevent or reduce phase separation of an EVA resin having a relatively high VA content, with surprising improvement in the clarity of the resulting coating, and with no adverse effect on peel strength.

### Comparative Example 12 and Example 6

A further series of composite films were prepared to investigate the effect of the amount of EVA copolymer in the coating layer on the peel strength. Comparative Example 12 was based on Example 6, except that the amount of Elvax®4260 was varied as shown in Table 6 below, which also shows the peel strength performance. The composition of the coating layer and base layer, and the method of preparation of the composite film, were otherwise identical to Example 6.

**Table 6**

| Example | 6 | 12 (C) |
|---|---|---|
| Elvax® 4260 | 31% | 10% |
| Kraton® G1657ms | 29% | 50% |
| Piccolyte® M115 | 37% | 37% |
| Kemamide EZ | 1.5% | 1.5% |

(continued)

| Example | 6 | 12 (C) |
|---|---|---|
| Syloid® 620 | 1.5% | 1.5% |
| | | |
| Peel Strength (g/25.4mm) | 1013 | 1148* |
| * non-clean peel; coating residue observed on the PP substrate after peeling | | |

The results in Table 6 demonstrate that adhesion performance becomes unsatisfactory as the amount of EVA relative to the total weight of the coating layer becomes relatively low. The film according to the present invention exhibited an easy and clean peel when manually peeled from the tray. In contrast, the film of Comparative Example 12 left large amounts of coating residue on the polypropylene substrate after peeling.

## Claims

1. A heat-sealable composite film comprising an oriented polyester substrate layer having a first and second surface and disposed on a first surface of the substrate layer a heat-sealable polymeric coating layer comprising a styrenic linear block copolymer thermoplastic elastomer, an ethylene vinyl acetate (EVA) copolymer and a tackifying resin, wherein the heat-sealable polymeric layer comprises the EVA copolymer in an amount of from 25 to 35 wt% by total weight of the heat-sealable polymeric layer.

2. A heat-sealable composite film according to claim 1 wherein said polyester substrate layer is biaxially oriented.

3. A heat-sealable composite film according to claim 1 or 2 wherein said polyester substrate layer is polyethylene terephthalate.

4. A heat-sealable composite film according to any preceding claim wherein

    (i) the styrenic linear block copolymer thermoplastic elastomer consists of polystyrene blocks and rubber blocks derived from butadiene and/or isoprene, or their hydrogenated equivalents; and/or
    (ii) the styrene content of said styrenic linear block copolymer thermoplastic elastomer is in the range from 5 to 50%, preferably from 8 to 30%, preferably 10 to about 20%, and preferably 10 to about 15%, by mass of the copolymer; and/or
    (iii) the styrenic linear block copolymer thermoplastic elastomer comprises rubber blocks which consist of polybutadiene or polyisoprene or combinations thereof, wherein said copolymers are triblock copolymers with polystyrene blocks at each end of a triblock and linked together by said rubber block.

5. A heat-sealable composite film according to any preceding claim wherein the styrenic linear block copolymer thermoplastic elastomer comprises rubber blocks which consist of hydrogenated polybutadiene or polyisoprene or combinations thereof, preferably wherein the hydrogenated styrenic copolymers are selected from:

    (i) triblock copolymers containing styrene blocks and rubber blocks consisting of ethylene and butylene repeating units; and
    (ii) triblock copolymers containing styrene blocks and rubber blocks consisting of ethylene and propylene repeating units.

6. A heat-sealable composite film according to any preceding claim wherein the styrenic linear block copolymer thermoplastic elastomer exhibits

    (i) a weight average molecular weight (Mw) as measured according to the description from 50,000 to 400,000, preferably from 50,000 to 200,000, and/or wherein the weight average molecular weight (Mw) of the styrene block is from 5,000 to 50,000, preferably from 5,000 to 25,000; and/or
    (ii) a tensile strength, measured according to ASTM D412-16 on film cast from toluene solution, of at least 5 MPa, preferably at least 10 MPa, preferably at least 15 MPa, preferably at least 20 MPa, and preferably in the range of 15 to 30 MPa; and/or

(iii) a solution viscosity of no more than 250 cPs, preferably no more than 100 cPs, preferably at least 5 cPs, preferably at least 10 cPs, measured with a Brookfield Viscometer at 25°C in a toluene solution at 10wt%; and/or
(iv) a glass transition temperature of in the range of -50 to -80°C, preferably -60 to -70°C, and/or a melting point of greater than 0°C and preferably less than 50°C.

7.  A heat-sealable composite film according to any preceding claim wherein the heat-sealable polymeric layer comprises the styrenic copolymer in an amount of from 10 to 50 wt%, preferably 20 to 40 wt%, preferably 25 to 35 wt%, by total weight of the layer.

8.  A heat-sealable composite film according to any preceding claim wherein the EVA copolymer

(i) has a vinyl acetate content in the range of 5 to 50 wt%, 15 to 50wt%, and preferably 18 to 40wt%, and optionally comprises an additional comonomer, preferably an ethylenically unsaturated comonomer, preferably selected from acrylic acid and methacrylic acid, preferably wherein the total amount of additional comonomer is no more than 5wt%; and/or
(ii) exhibits a melting point as measured according to the description of from 40°C to 95°C, preferably 45°C to 75°C and/or a melt index of from 5 to 1000, preferably 5 to 600, preferably 5 to 200, preferably 5 to 100 g/10min.

9.  A heat-sealable composite film according to any preceding claim wherein the heat-sealable polymeric layer comprises a blend of a first EVA copolymer (EVA-1) and a second EVA copolymer (EVA-2), preferably wherein said first EVA copolymer (EVA-1) has a vinyl acetate content in the range of 20 to 50wt%, preferably 20 to 40wt%, and preferably a melt index in the range of from 2.5 to 100, preferably 5 to 100 g/10min, and said second EVA copolymer (EVA-2) has a VA content in the range of 5 to 20wt%, preferably 10 to 20wt%, and preferably exhibits a melt index of from 100 to 1000, preferably 150 to 600 g/10min;
optionally wherein the weight ratio of EVA-2/EVA-1 is in the range of greater than 0/100 to 100/100, more preferably greater than 0/100 to 65/100, more preferably 15/100 to 50/100, more preferably 15/100 to 30/100.

10.  A heat-sealable composite film according to any of claims 1 to 8 wherein a single grade of EVA copolymer is present in the heat-sealable layer and the vinyl acetate (VA) content of said resin is in the range of 5 to 50 wt%, preferably 15 to 50wt%, and preferably 18 to 40wt%, preferably 20 to 30 wt%, preferably 23.0 to 30.0 wt%, preferably 25 to 28wt%, preferably wherein the melt index of the EVA copolymer is in the range of from 5 to 200, preferably 5 to 100 g/10min.

11.  A heat-sealable composite film according to any preceding claim wherein the tackifying resin

(i) is selected from polyterpenes, hydrocarbon resins, rosin and rosin ester resins, and combinations thereof; and/or
(ii) exhibits ring and ball softening points from 20°C to 160°C, preferably 90°C to 125°C, and/or a number average molecular weights of 200 to 5000, preferably 500 to 2000.

12.  A heat-sealable composite film according to any preceding claim wherein the tackifying resin(s) are selected from: natural polyterpene resins derived from alpha-pinene, beta-pinene and d-limonene; hydrocarbon resins derived from petroleum-based feedstocks selected from aliphatic (Cs) hydrocarbon resins, aromatic ($C_9$) hydrocarbon resins, dicyclopentadiene resins and mixtures thereof; and methyl, triethylene glycol, glycerol, and pentaerythritol esters of rosins.

13.  A heat-sealable composite film according to any preceding claim wherein the heat-sealable polymeric layer comprises the tackifying resin in an amount of from 15 to 50 wt%, preferably from 15 to 40 wt%, preferably from 30 to 40 wt%, by total weight of the heat-sealable polymeric layer.

14.  A heat-sealable composite film according to any preceding claim wherein a primer coating layer is disposed on the first surface of the substrate layer such that the layer order is substrate layer / primer layer / heat-sealable polymeric coating layer, preferably wherein the primer is a polymer selected from polyvinylidene chloride (PVDC), EVA and ethylene acrylic acid (EAA) resins, preferably from PVDC and EVA resins, and preferably from PVDC resins;
optionally wherein the primer layer exhibits a dry coat-weight of from about 0.05 to about 1.0 g/m$^2$, preferably from about 0.1 g/m$^2$ to about 0.5 g/m$^2$, and/or a thickness of from 0.05 $\mu$m to 1 $\mu$m, preferably from 0.05 $\mu$m to 0.5$\mu$m.

15. A heat-sealable composite film according to any preceding claim wherein the thickness of the substrate is from about 10 to about 100 μm, and the thickness of the heat-sealable layer is from 5 to 45%, preferably from 10 to 40 % and preferably from 12 to 35 %, of the total thickness of the composite film, and/or a thickness of from 2 to 10 μm, preferably from 3 to 6 μm.

16. A heat-sealable composite film according to any preceding claim which exhibits a

(i) heat-seal strength to a polypropylene substrate in the range of 600 to 1500 g/25.4mm, preferably 800 to 1500 g/25.4mm, preferably 800 to 1200 g/25.4mm, preferably 800 to 1125 g/25.4mm; and/or
(ii) clarity as calculated according to the description of at least 70%, preferably at least 75%, preferably at least 80%, and preferably at least 85%.

17. A heat-sealable composite film comprising an oriented polyester substrate layer having a first and second surface and disposed on a first surface of the substrate layer a heat-sealable polymeric coating layer comprising a styrenic linear block copolymer thermoplastic elastomer, a tackifying resin and a blend of a first ethylene vinyl acetate (EVA) copolymer (EVA-1) and a second ethylene vinyl acetate (EVA) copolymer (EVA-2),

wherein said first EVA copolymer (EVA-1) has a vinyl acetate content in the range of 20 to 50wt% and said second EVA copolymer (EVA-2) has a VA content in the range of 5 to 20wt%,
wherein the weight ratio of EVA-2/EVA-1 is in the range of greater than 0/100 to 65/100,
and wherein the heat-sealable polymeric layer comprises a total amount of the EVA copolymer from 20 to 40 wt% by total weight of the heat-sealable polymeric layer.

18. A heat-sealable composite film according to claim 17, wherein the heat-sealable composite film is as defined in any of claims 1 to 9 or claims 11 to 16 when dependent on any of claims 1 to 9.

19. A sealed container comprising a receptacle containing a food product, and a lid formed from a heat-sealable composite film according to any of claims 1 to 18, wherein said heat-sealable polymeric layer of the composite film is in direct contact with the receptacle and wherein the composite film is adhered to the receptacle via a peelable heat-seal bond, preferably wherein the receptacle is made from polyolefin, preferably polypropylene or polyethylene, and preferably polypropylene.

20. Use of a composite film according to any of claims 1 to 18 as a lid in the packaging of a food product, particularly an ovenable meal, said packaging further comprising a receptacle, particularly wherein the receptacle is made from polyolefin, preferably polypropylene or polyethylene, and preferably polypropylene.


**Patentansprüche**

1. Heißsiegelfähige Verbundfolie, umfassend eine orientierte Polyestersubstratschicht mit einer ersten und einer zweiten Oberfläche, und auf einer ersten Oberfläche der Substratschicht angeordnet eine heißsiegelfähige Polymerbeschichtungsschicht, die ein thermoplastisches lineares Styrol-Blockcopolymer-Elastomer, ein Ethylen-Vinylacetat(EVA)-Copolymer und ein klebrigmachendes Harz umfasst, wobei die heißsiegelfähige Polymerschicht das EVA-Copolymer in einer Menge von 25 bis 35 Gew.-%, bezogen auf das Gesamtgewicht der heißsiegelfähigen Polymerschicht, umfasst.

2. Heißsiegelfähige Verbundfolie gemäß Anspruch 1, wobei die Polyestersubstratschicht biaxial orientiert ist.

3. Heißsiegelfähige Verbundfolie gemäß Anspruch 1 oder 2, wobei die Polyestersubstratschicht Polyethylenterephthalat ist.

4. Heißsiegelfähige Verbundfolie gemäß einem der vorstehenden Ansprüche, wobei

(i) das thermoplastische lineare Styrol-Blockcopolymer-Elastomer aus Polystyrolblöcken und Kautschukblöcken, die von Butadien und/oder Isopren oder ihren hydrierten Äquivalenten abgeleitet sind, besteht; und/oder
(ii) der Styrolgehalt des thermoplastischen linearen Styrol-Blockcopolymer-Elastomers in dem Bereich von 5 bis 50 %, vorzugsweise von 8 bis 30 %, vorzugsweise 10 bis etwa 20 % und vorzugsweise 10 bis etwa 15 %, bezogen auf die Masse des Copolymers, liegt; und/oder

(iii) das thermoplastische lineare Styrol-Blockcopolymer-Elastomer Kautschukblöcke umfasst, die aus Polybutadien oder Polyisopren oder Kombinationen davon bestehen, wobei die Copolymere Triblock-Copolymere mit Polystyrolblöcken an jedem Ende eines Triblocks, durch den Kautschukblock miteinander verbunden, sind.

5. Heißsiegelfähige Verbundfolie gemäß einem der vorstehenden Ansprüche, wobei das thermoplastische lineare Styrol-Blockcopolymer-Elastomer Kautschukblöcke umfasst, die aus hydriertem Polybutadien oder Polyisopren oder Kombinationen davon bestehen, wobei die hydrierten Styrol-Copolymere vorzugsweise ausgewählt sind aus:

(i) Triblock-Copolymeren, die Styrolblöcke und Kautschukblöcke, die aus Ethylen- und Butylen-Wiederholungseinheiten bestehen, enthalten; und
(ii) Triblock-Copolymeren, die Styrolblöcke und Kautschukblöcke, die aus Ethylen- und Propylen-Wiederholungseinheiten bestehen, enthalten.

6. Heißsiegelfähige Verbundfolie gemäß einem der vorstehenden Ansprüche, wobei das thermoplastische lineare Styrol-Blockcopolymer-Elastomer aufweist:

(i) ein gewichtsgemitteltes Molekulargewicht (Mw), wie gemessen gemäß der Beschreibung, von 50.000 bis 400.000, vorzugsweise von 50.000 bis 200.000, und/oder wobei das gewichtsgemittelte Molekulargewicht (Mw) des Styrolblocks von 5.000 bis 50.000, vorzugsweise von 5.000 bis 25.000, beträgt; und/oder
(ii) eine Zugfestigkeit, gemessen gemäß ASTM D412-16 an aus Toluollösung gegossener Folie, von wenigstens 5 MPa, vorzugsweise wenigstens 10 MPa, vorzugsweise wenigstens 15 MPa, vorzugsweise wenigstens 20 Mpa und vorzugsweise in dem Bereich von 15 bis 30 MPa; und/oder
(iii) eine Lösungsviskosität von nicht mehr als 250 cPs, vorzugsweise nicht mehr als 100 cPs, vorzugsweise wenigstens 5 cPs, vorzugsweise wenigstens 10 cPs, gemessen mit einem Brookfield-Viskosimeter bei 25 °C in einer Toluollösung von 10 Gew.-%; und/oder
(iv) eine Glasübergangstemperatur in dem Bereich von -50 bis -80 °C, vorzugsweise -60 bis -70 °C, und/oder einen Schmelzpunkt von höher als 0 °C und vorzugsweise niedriger als 50 °C.

7. Heißsiegelfähige Verbundfolie gemäß einem der vorstehenden Ansprüche, wobei die heißsiegelfähige Polymerschicht das Styrol-Copolymer in einer Menge von 10 bis 50 Gew.-%, vorzugsweise 20 bis 40 Gew.-%, vorzugsweise 25 bis 35 Gew.-%, bezogen auf das Gesamtgewicht der Schicht, umfasst.

8. Heißsiegelfähige Verbundfolie gemäß einem der vorstehenden Ansprüche, wobei das EVA-Copolymer

(i) einen Vinylacetatgehalt in dem Bereich von 5 bis 50 Gew.-%, 15 bis 50 Gew.-% und vorzugsweise 18 bis 40 Gew.-% aufweist, und gegebenenfalls ein zusätzliches Comonomer umfasst, vorzugsweise ein ethylenisch ungesättigtes Comonomer, vorzugsweise ausgewählt aus Acrylsäure und Methacrylsäure, wobei die Gesamtmenge an zusätzlichem Comonomer vorzugsweise nicht mehr als 5 Gew.-% beträgt; und/oder
(ii) einen Schmelzpunkt, wie gemessen gemäß der Beschreibung, von 40 °C bis 95 °C, vorzugsweise 45 °C bis 75 °C, und/oder einen Schmelzindex von 5 bis 1000, vorzugsweise 5 bis 600, vorzugsweise 5 bis 200, vorzugsweise 5 bis 100 g/10 min, aufweist.

9. Heißsiegelfähige Verbundfolie gemäß einem der vorstehenden Ansprüche, wobei die heißsiegelfähige Polymerschicht ein Gemisch von einem ersten EVA-Copolymer (EVA-1) und einem zweiten EVA-Copolymer (EVA-2) umfasst, wobei vorzugsweise das erste EVA-Copolymer (EVA-1) einen Vinylacetatgehalt in dem Bereich von 20 bis 50 Gew.-%, vorzugsweise 20 bis 40 Gew.-%, und vorzugsweise einen Schmelzindex in dem Bereich von 2,5 bis 100, vorzugsweise 5 bis 100 g/10 min, aufweist und das zweite EVA-Copolymer (EVA-2) einen VA-Gehalt in dem Bereich von 5 bis 20 Gew.-%, vorzugsweise 10 bis 20 Gew.-%, und vorzugsweise einen Schmelzindex von 100 bis 1000, vorzugsweise 150 bis 600 g/10 min, aufweist; wobei das Gewichtsverhältnis von EVA-2/EVA-1 gegebenenfalls in dem Bereich von höher als 0/100 bis 100/100, bevorzugter höher als 0/100 bis 65/100, bevorzugter 15/100 bis 50/100, bevorzugter 15/100 bis 30/100, liegt.

10. Heißsiegelfähige Verbundfolie gemäß einem der Ansprüche 1 bis 8, wobei eine einzige Sorte von EVA-Copolymer in der heißsiegelfähigen Schicht vorhanden ist und der Vinylacetat(VA)-Gehalt des Harzes in dem Bereich von 5 bis 50 Gew.-%, vorzugsweise 15 bis 50 Gew.-%, und vorzugsweise 18 bis 40 Gew.-%, vorzugsweise 20 bis 30 Gew.-%, vorzugsweise 23,0 bis 30,0 Gew.-%, vorzugsweise 25 bis 28 Gew.-%, liegt, wobei der Schmelzindex des EVA-Copolymers vorzugsweise in dem Bereich von 5 bis 200, vorzugsweise 5 bis 100 g/10 min, liegt.

**11.** Heißsiegelfähige Verbundfolie gemäß einem der vorstehenden Ansprüche, wobei das klebrigmachende Harz

(i) ausgewählt ist aus Polyterpenen, Kohlenwasserstoffharzen, Kolophonium und Kolophoniumesterharzen, und Kombinationen davon; und/oder

(ii) Ring-und-Kugel-Erweichungspunkte von 20 °C bis 160 °C, vorzugsweise 90 °C bis 125 °C, aufweist und/oder ein anzahlgemitteltes Molekulargewicht von 200 bis 5000, vorzugsweise 500 bis 2000, aufweist.

**12.** Heißsiegelfähige Verbundfolie gemäß einem der vorstehenden Ansprüche, wobei das/die klebrigmachenden Harz(e) ausgewählt ist/sind aus: natürlichen Polyterpenharzen abgeleitet von alpha-Pinen, beta-Pinen und d-Limonen; Kohlenwasserstoffharzen abgeleitet von Ausgangsmaterialien auf Erdölbasis, ausgewählt aus aliphatischen ($C_5$)-Kohlenwasserstoffharzen, aromatischen ($C_9$)-Kohlenwasserstoffharzen, Dicyclopentadienharzen und Gemischen davon; und Methyl-, Triethylenglycol-, Glycerol- und Pentaerythritolestern von Kolophonium.

**13.** Heißsiegelfähige Verbundfolie gemäß einem der vorstehenden Ansprüche, wobei die heißsiegelfähige Polymerschicht das klebrigmachende Harz in einer Menge von 15 bis 50 Gew.-%, vorzugsweise von 15 bis 40 Gew.-%, vorzugsweise von 30 bis 40 Gew.-%, bezogen auf das Gesamtgewicht der heißsiegelfähigen Polymerschicht, umfasst.

**14.** Heißsiegelfähige Verbundfolie gemäß einem der vorstehenden Ansprüche, wobei eine Grundierungsbeschichtung auf der ersten Oberfläche der Substratschicht angeordnet ist, so dass die Schichtreihenfolge Substratschicht / Grundierungsschicht / heißsiegelfähige Polymerbeschichtungsschicht ist, wobei die Grundierung vorzugsweise ein Polymer ausgewählt aus Polyvinylidenchlorid- (PVDC), EVA- und EthylenAcrylsäure(EAA)-Harzen ist, vorzugsweise aus PVDC- und EVA-Harzen und vorzugsweise aus PVDC-Harzen; wobei die Grundierungsschicht gegebenenfalls ein Trockenbeschichtungsgewicht von etwa 0,05 bis etwa 1,0 g/m$^2$, vorzugsweise von etwa 0,1 g/m$^2$ bis etwa 0,5 g/m$^2$, und/oder eine Dicke von 0,05 $\mu$m bis 1 $\mu$m, vorzugsweise von 0,05 um bis 0,5 $\mu$m, aufweist.

**15.** Heißsiegelfähige Verbundfolie gemäß einem der vorstehenden Ansprüche, wobei die Dicke des Substrats von etwa 10 bis etwa 100 $\mu$m beträgt und die Dicke der heißsiegelfähigen Schicht von 5 bis 45 %, vorzugsweise von 10 bis 40 % und vorzugsweise von 12 bis 35 % der Gesamtdicke der Verbundfolie beträgt, und/oder eine Dicke von 2 bis 10 $\mu$m, vorzugsweise von 3 bis 6 $\mu$m, ist.

**16.** Heißsiegelfähige Verbundfolie gemäß einem der vorstehenden Ansprüche, die aufweist:

(i) eine Heißsiegelfestigkeit an ein Polypropylensubstrat in dem Bereich von 600 bis 1500 g/25,4 mm, vorzugsweise 800 bis 1500 g/25,4 mm, vorzugsweise 800 bis 1200 g/25,4 mm, vorzugsweise 800 bis 1125 g/25,4 mm; und/oder

(ii) eine Klarheit, wie berechnet gemäß der Beschreibung, von wenigstens 70 %, vorzugsweise wenigstens 75 %, vorzugsweise wenigstens 80 % und vorzugsweise wenigstens 85 %.

**17.** Heißsiegelfähige Verbundfolie, umfassend eine orientierte Polyestersubstratschicht mit einer ersten und einer zweiten Oberfläche, und auf einer ersten Oberfläche der Substratschicht angeordnet eine heißsiegelfähige Polymerbeschichtungsschicht, die ein thermoplastisches lineares Styrol-Blockcopolymer-Elastomer, ein klebrigmachendes Harz und ein Gemisch von einem ersten Ethylen-Vinylacetat(EVA)-Copolymer (EVA-1) und einem zweiten Ethylen-Vinylacetat(EVA)-Copolymer (EVA-2) umfasst,

wobei das erste EVA-Copolymer (EVA-1) einen Vinylacetatgehalt in dem Bereich von 20 bis 50 Gew.-% aufweist und das zweite EVA-Copolymer (EVA-2) einen VA-Gehalt in dem Bereich von 5 bis 20 Gew.-% aufweist, wobei das Gewichtsverhältnis von EVA-2/EVA-1 in dem Bereich von höher als 0/100 bis 65/100 liegt, und wobei die heißsiegelfähige Polymerschicht eine Gesamtmenge an dem EVA-Copolymer von 20 bis 40 Gew.-%, bezogen auf die Gesamtmenge der heißsiegelfähigen Polymerschicht, umfasst.

**18.** Heißsiegelfähige Verbundfolie gemäß Anspruch 17, wobei die heißsiegelfähige Verbundfolie wie in einem der Ansprüche 1 bis 9 oder Ansprüche 11 bis 16, wenn abhängig von einem der Ansprüche 1 bis 9, definiert ist.

**19.** Abgedichteter Behälter, umfassend eine Aufnahme, die ein Lebensmittelprodukt enthält, und einen Deckel, der aus einer heißsiegelfähigen Verbundfolie gemäß einem der Ansprüche 1 bis 18 gebildet ist, wobei die heißsiegelfähige Polymerschicht der Verbundfolie in direktem Kontakt mit der Aufnahme steht und wobei die Verbundfolie über eine abziehbare Heißsiegelbindung an der Aufnahme haftet, wobei die Aufnahme vorzugsweise aus Polyolefin besteht, vorzugsweise Polypropylen oder Polyethylen und vorzugsweise Polypropylen.

20. Verwendung einer Verbundfolie gemäß einem der Ansprüche 1 bis 18 als Deckel bei der Verpackung eines Lebensmittelprodukts, insbesondere einer ofengeeigneten Mahlzeit, wobei die Verpackung ferner eine Aufnahme umfasst, wobei die Aufnahme insbesondere aus Polyolefin besteht, vorzugsweise Polypropylen oder Polyethylen und vorzugsweise Polypropylen.

**Revendications**

1. Film composite thermoscellable comprenant une couche de substrat de polyester orienté ayant une première et une deuxième surface et, disposée sur une première surface de la couche de substrat, une couche de revêtement polymérique thermoscellable comprenant un élastomère thermoplastique de copolymère à blocs linéaire styrénique, un copolymère d'éthylène-acétate de vinyle (EVA) et une résine tackifiante, dans lequel la couche polymérique thermoscellable comprend le copolymère EVA en une quantité allant de 25 à 35 % en poids par poids total de la couche polymérique thermoscellable.

2. Film composite thermoscellable selon la revendication 1, dans lequel ladite couche de substrat de polyester est orientée de manière biaxiale.

3. Film composite thermoscellable selon la revendication 1 ou 2, dans lequel ladite couche de substrat de polyester est un poly(téréphtalate d'éthylène).

4. Film composite thermoscellable selon l'une quelconque des revendications précédentes, dans lequel

   (i) l'élastomère thermoplastique de copolymère à blocs linéaire styrénique est constitué de blocs de polystyrène et de blocs de caoutchouc dérivés de butadiène et/ou d'isoprène, ou de leurs équivalents hydrogénés ; et/ou
   (ii) la teneur en styrène dudit élastomère thermoplastique de copolymère à blocs linéaire styrénique est dans la plage de 5 à 50 %, de préférence de 8 à 30 %, de préférence de 10 à environ 20 %, et de préférence de 10 à environ 15 %, par masse du copolymère ; et/ou
   (iii) l'élastomère thermoplastique de copolymère à blocs linéaire styrénique comprend des blocs de caoutchouc qui sont constitués de polybutadiène ou de polyisoprène ou de combinaisons correspondantes, dans lequel lesdits copolymères sont des copolymères triblocs comportant des blocs de polystyrène au niveau de chaque extrémité d'un tribloc et liés ensemble par ledit bloc de caoutchouc.

5. Film composite thermoscellable selon l'une quelconque des revendications précédentes, dans lequel l'élastomère thermoplastique de copolymère à blocs linéaire styrénique comprend des blocs de caoutchouc qui sont constitués de polybutadiène ou polyisoprène hydrogéné ou de combinaisons correspondantes, de préférence dans lequel les copolymères styréniques hydrogénés sont sélectionnés parmi :

   (i) des copolymères triblocs contenant des blocs de styrène et des blocs de caoutchouc constitués par des motifs répétitifs d'éthylène et de butylène ; et
   (ii) des copolymères triblocs contenant des blocs de styrène et des blocs de caoutchouc constitués par des motifs répétitifs d'éthylène et de propylène.

6. Film composite thermoscellable selon l'une quelconque des revendications précédentes, dans lequel l'élastomère thermoplastique de copolymère à blocs linéaire styrénique présente

   (i) un poids moléculaire moyen en poids (Mw) tel que mesuré selon la description de 50 000 à 400 000, de préférence de 50 000 à 200 000, et/ou dans lequel le poids moléculaire moyen en poids (Mw) du bloc de styrène est de 5 000 à 50 000, de préférence de 5 000 à 25 000 ; et/ou
   (ii) une résistance à la traction, mesurée selon la norme ASTM D412-16 sur film coulé à partir d'une solution de toluène, d'au moins 5 MPa, de préférence d'au moins 10 MPa, de préférence d'au moins 15 MPa, de préférence d'au moins 20 MPa, et de préférence dans la plage de 15 à 30 MPa ; et/ou
   (iii) une viscosité de solution ne dépassant pas 250 cPs, de préférence pas plus de 100 cPs, de préférence au moins 5 cPs, de préférence au moins 10 cPs, mesurée avec un viscosimètre Brookfield à 25 °C dans une solution de toluène à 10 % en poids ; et/ou

(iv) une température de transition vitreuse dans la plage de -50 à -80 °C, de préférence de -60 à -70 °C, et/ou un point de fusion supérieur à 0 °C et de préférence inférieur à 50 °C.

7. Film composite thermoscellable selon l'une quelconque des revendications précédentes, dans lequel la couche polymérique thermoscellable comprend le copolymère styrénique en une quantité allant de 10 à 50 % en poids, de préférence de 20 à 40 % en poids, de préférence de 25 à 35 % en poids, par poids total de la couche.

8. Film composite thermoscellable selon l'une quelconque des revendications précédentes, dans lequel le copolymère EVA

(i) a une teneur en acétate de vinyle dans la plage de 5 à 50 % en poids, de 15 à 50 % en poids, et de préférence de 18 à 40 % en poids, et éventuellement comprend un comonomère supplémentaire, de préférence un comonomère éthyléniquement insaturé, de préférence sélectionné parmi l'acide acrylique et l'acide méthacrylique, de préférence dans lequel la quantité totale de comonomère supplémentaire n'est pas supérieure à 5 % en poids ; et/ou
(ii) présente un point de fusion comme mesuré selon la description allant de 40 °C à 95 °C, de préférence 45 °C à 75 °C et/ou un indice de fluidité à chaud de 5 à 1 000, de préférence 5 à 600, de préférence 5 à 200, de préférence 5 à 100 g/10 min.

9. Film composite thermoscellable selon l'une quelconque des revendications précédentes, dans lequel la couche polymérique thermoscellable comprend un mélange d'un premier copolymère EVA (EVA-1) et d'un deuxième copolymère EVA (EVA-2), de préférence dans lequel ledit premier copolymère EVA (EVA-1) a une teneur en acétate de vinyle dans la plage de 20 à 50 % en poids, de préférence 20 à 40 % en poids, et de préférence un indice de fluidité à chaud dans la plage de 2,5 à 100, de préférence 5 à 100 g/10 min, et ledit deuxième copolymère EVA (EVA-2) a une teneur en VA dans la plage de 5 à 20 % en poids, de préférence 10 à 20 % en poids, et présente de préférence un indice de fluidité à chaud allant de 100 à 1 000, de préférence 150 à 600 g/10 min ; éventuellement, dans lequel le rapport en poids d'EVA-2/EVA-1 est dans la plage supérieure à 0/100 à 100/100, plus préférablement supérieure à 0/100 à 65/100, plus préférablement 15/100 à 50/100, plus préférablement 15/100 à 30/100.

10. Film composite thermoscellable selon l'une quelconque des revendications 1 à 8, dans lequel une seule qualité de copolymère EVA est présente dans la couche thermoscellable et la teneur en acétate de vinyle (VA) de ladite résine est dans la plage de 5 à 50 % en poids, de préférence 15 à 50 % en poids, et de préférence 18 à 40 % en poids, de préférence 20 à 30 % en poids, de préférence 23,0 à 30,0 % en poids, de préférence 25 à 28 % en poids, de préférence dans lequel l'indice de fluidité à chaud du copolymère EVA est dans la plage de 5 à 200, de préférence 5 à 100 g/10 min.

11. Film composite thermoscellable selon l'une quelconque des revendications précédentes, dans lequel la résine tackifiante

(i) est sélectionnée parmi des polyterpènes, des résines d'hydrocarbure, des résines de rosine et d'ester de rosine, et des combinaisons correspondantes ; et/ou
(ii) présente des points de ramollissement à l'anneau et la bille de 20 °C à 160 °C, de préférence 90 °C à 125 °C, et/ou un poids moléculaire moyen en nombre de 200 à 5 000, de préférence 500 à 2 000.

12. Film composite thermoscellable selon l'une quelconque des revendications précédentes, dans lequel la ou les résine(s) tackifiante(s) sont sélectionnées parmi : résines polyterpéniques naturelles dérivées de l'alpha-pinène, du bêta-pinène et du d-limonène ; des résines d'hydrocarbures dérivées de matières premières à base de pétrole sélectionnées parmi les résines d'hydrocarbures aliphatiques ($C_5$), les résines d'hydrocarbures aromatiques ($C_9$), les résines de dicyclopentadiène et les mélanges correspondants ; et les esters de méthyle, de triéthylèneglycol, de glycérol et de pentaérythritol de rosines.

13. Film composite thermoscellable selon l'une quelconque des revendications précédentes, dans lequel la couche polymérique thermoscellable comprend la résine tackifiante en une quantité de 15 à 50 % en poids, de préférence de 15 à 40 % en poids, de préférence de 30 à 40 % en poids, par poids total de la couche polymérique thermoscellable.

14. Film composite thermoscellable selon l'une quelconque des revendications précédentes, dans lequel une couche de revêtement d'apprêt est disposée sur la première surface de la couche de substrat de sorte que l'ordre des couches soit couche de substrat / couche d'apprêt / couche de revêtement polymérique thermoscellable, de préférence dans lequel l'apprêt est un polymère sélectionné parmi des résines de poly(chlorure de vinylidène) (PVDC), d'EVA et d'éthylène acide acrylique (EAA), de préférence parmi les résines de PVDC et d'EVA, et de préférence parmi les résines de PVDC ;

éventuellement, dans lequel la couche d'apprêt présente un poids de revêtement à sec d'environ 0,05 à environ 1,0 g/m$^2$, de préférence d'environ 0,1 g/m$^2$ à environ 0,5 g/m$^2$, et/ou une épaisseur allant de 0,05 $\mu$m à 1 $\mu$m, de préférence de 0,05 $\mu$m à 0,5 $\mu$m.

15. Film composite thermoscellable selon l'une quelconque des revendications précédentes, dans lequel l'épaisseur du substrat est d'environ 10 à environ 100 $\mu$m, et l'épaisseur de la couche thermoscellable est de 5 à 45 %, de préférence de 10 à 40 % et de préférence de 12 à 35 %, de l'épaisseur totale du film composite, et/ou une épaisseur de 2 à 10 $\mu$m, de préférence de 3 à 6 $\mu$m.

16. Film composite thermoscellable selon l'une quelconque des revendications précédentes qui présente une

(i) résistance au thermoscellage sur un substrat de polypropylène dans la plage de 600 à 1 500 g/25,4 mm, de préférence 800 à 1 500 g/25,4 mm, de préférence 800 à 1 200 g/25,4 mm, de préférence 800 à 1 125 g/25,4 mm ; et/ou
(ii) clarté comme calculée selon la description d'au moins 70 %, de préférence d'au moins 75 %, de préférence d'au moins 80 % et de préférence d'au moins 85 %.

17. Film composite thermoscellable comprenant une couche de substrat de polyester orienté ayant une première et une deuxième surface et, disposée sur une première surface de la couche de substrat, une couche de revêtement polymérique thermoscellable comprenant un élastomère thermoplastique de copolymère à blocs linéaire styrénique, une résine tackifiante et un mélange d'un premier copolymère d'éthylène-acétate de vinyle (EVA) (EVA-1) et d'un deuxième copolymère d'éthylène-acétate de vinyle (EVA) (EVA-2),

dans lequel ledit premier copolymère EVA (EVA-1) a une teneur en acétate de vinyle dans la plage de 20 à 50 % en poids et ledit deuxième copolymère EVA (EVA-2) a une teneur en VA dans la plage de 5 à 20 % en poids, dans lequel le rapport en poids d'EVA-2/EVA-1 est dans la plage supérieure à 0/100 à 65/100, et dans lequel la couche polymérique thermoscellable comprend une quantité totale de copolymère EVA de 20 à 40 % en poids par poids total de la couche polymérique thermoscellable.

18. Film composite thermoscellable selon la revendication 17, dans lequel le film composite thermoscellable est tel que défini dans l'une quelconque des revendications 1 à 9 ou les revendications 11 à 16 lorsqu'elles sont dépendantes de l'une quelconque des revendications 1 à 9.

19. Récipient scellé comprenant un réceptacle contenant un produit alimentaire et un couvercle formé à partir d'un film composite thermoscellable selon l'une quelconque des revendications 1 à 18, dans lequel ladite couche polymérique thermoscellable du film composite est en contact direct avec le réceptacle et dans lequel le film composite est collé au réceptacle via une liaison thermoscellée pelable, de préférence dans lequel le réceptacle est composé de polyoléfine, de préférence de polypropylène ou de polyéthylène, et de préférence de polypropylène.

20. Utilisation d'un film composite selon l'une quelconque des revendications 1 à 18 comme un couvercle dans l'emballage d'un produit alimentaire, en particulier un repas pouvant être passé au four, ledit emballage comprenant en outre un réceptacle, en particulier dans lequel le réceptacle est composé de polyoléfine, de préférence de polypropylène ou de polyéthylène, et de préférence de polypropylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006001548 A2
- WO 2012120260 A
- US 3494942 A
- US 3634594 A
- US 3670054 A
- US 3700633 A
- EP 2108673 A
- US 20090117362 A1

**Non-patent literature cited in the description**

- **HITCHCOCK ; HAMMONS ; YAU.** The dual-capillary method for modern-day viscometry. *American Laboratory,* August 1994
- **B. WUNDERLICH.** Macromolecular Physics. Academic Press, 1976